# EUROPÄISCHE PATENTSCHRIFT

(11) **EP 1 321 288 B1**
(45) Veröffentlichungstag und Bekanntmachung des Hinweises auf die Patenterteilung: **07.09.2005**
(21) Anmeldenummer: 02028232.3
(22) Anmeldetag: 16.12.2002
(51) Int. Cl.: B32B 5/04

(54) **Elastisches Folienlaminat**
Elastic composite foil
Feuille composite élastique

(30) Priorität: 14.12.2001 DE 10161276
(43) Veröffentlichungstag der Anmeldung: 25.06.2003
(73) Patentinhaber: Nordenia Deutschland Gronau GmbH, 48599 Gronau (DE)
(72) Erfinder: Hamulski, Markus, 48599 Gronau-Epe (DE); Schönbeck, Marcus, 33775 Versmold (DE)
(74) Vertreter: Albrecht, Rainer Harald

(56) Entgegenhaltungen:
- WO-A-00/38918
- US-A- 5 422 178
- US-A- 5 683 787
- US-A- 5 769 993

## Beschreibung

Die Erfindung betrifft ein elastisches Folienlaminat, dessen Elastizitätsmodul nach einer Dehnung um eine Länge ΔL_{A} sprunghaft ansteigt. Der Elastizitätsmodul beschreibt das Verhältnis aus Spannungsänderung und der zugehörigen Änderung der Dehnung bei einer Zugbeanspruchung des Folienlaminats. In einem Spannungs/Dehnungsdiagramm stellt sich die sprunghafte Änderung des Elastizitätsmoduls als starker Anstieg der über die Dehnung aufgetragene Spannungswerte dar.

Ein elastisches Folienlaminat mit der beschriebenen Spannungs/Dehnungscharakteristik ist aus EP 0 500 590 B1 (vgl. Fig. 5) bekannt. Das bekannte Material besteht aus einem durch Coextrusion herstellbaren Schichtenverbund mit einer elastomeren Trägerschicht und ein- oder beidseitig flächig aufgebrachten Außenschichten aus Polyolefinen, der durch Verstreckung über die Elastizitätsgrenze der Außenschichten hinaus und durch eine thermische Nachbehandlung eine Mikrotextur erhalten hat. Das Herstellungsverfahren ist aufwendig und die Einstellung eines definierten und an den Anwendungsfall angepassten Spannungs/Dehnungsverhaltens schwierig.

In EP 0 646 062 B1 ist eine elastisches Folienlaminat mit elastischen und nichtelastischen Bereichen beschrieben. Es weist eine elastomere Kernschicht und Außenhautschichten aus orientiertem Kunststoff auf, die vorzugsweise durch Coextrusion flächig miteinander verbunden sind. Das mehrschichtige Laminat wird über die Elastizitätsgrenze der Hautschichten hinaus gestreckt und anschließend in ausgewählten Bereichen erwärmt, was zu regelloser Anordnung des elastischen Laminats in diesen Bereichen führt. Man erhält durch ein aufwendiges Verfahren ein gebauschtes Material. Die Druckschrift macht keine Aussage darüber, wie sich das Material der Außenhautschicht verhält, wenn es über den Schwellenwert, der sich nach Streckung der gebauschten Bereiche ergibt, weiter gedehnt wird. Üblicherweise wird die Reißgrenze rasch erreicht, so dass das Material zumindest in Bezug auf seine Außenschichten zerstört wird.

Der Erfindung liegt die Aufgabe zugrunde, ein elastisches Folienmaterial anzugeben, dessen Elastizitätsmodul nach einer Dehnung um eine vorgegebene Länge sprunghaft ansteigt und dessen Spannungs/Dehnungsverhalten auf möglichst einfache Weise dem Anwendungsfall entsprechend angepasst werden kann. Es soll eine gute Reißfestigkeit aufweisen, so dass es auch im Bereich des stark ansteigenden Elastizitätsmoduls ohne Gefahr eines Reißens gedehnt werden kann.

Gegenstand der Erfindung und Lösung dieser Aufgabe ist ein elastisches Folienlaminat, dessen Elastizitätsmodul nach einer Dehnung um eine Länge ΔL_{A} sprunghaft ansteigt, mit
einer elastomeren Trägerfolie, die sich bei einer Verformung um eine Länge ΔL_{A} reversibel dehnen lässt, und
einer dehnbaren Folie aus einem plastisch verformbaren Kunststoff, die mit der elastomeren Trägerfolie nicht vollflächig, sondern lediglich an in Dehnungsrichtung beabstandeten Verbindungsbereichen verbunden ist,
wobei die dehnbare Folie infolge einer erstmaligen Dehnung des Folienlaminats um die Länge ΔL_{A} eine bleibende Verformung Δl_{b} aufweist, die wesentlich größer ist als eine bleibende Verformung Δlₐ der elastomeren Trägerfolie und zwischen den Verbindungsbereichen kleine Aufwölbungen bildet, wobei die dehnbare Folie eine Reißfestigkeit aufweist, die bei zunehmender Zugspannung eine zusätzliche Dehnung, die mindestens 10 % der ursprünglichen Folienlänge beträgt, über den Dehnungswert ΔL_{A} hinaus ohne Reißen zulässt.

Mit der erfindungsgemäßen Laminatfolie erreicht man insbesondere bei elastischen Verschlussbändern, wie sie für Hygieneartikel verwendet werden, eine ausreichende Festigkeit, ohne dass vergleichsweise dicke Elastomerfolien zum Einsatz kommen müssten, die höhere Materialkosten erfordern und auch nur eine begrenzte Dehnfähigkeit im elastischen Bereich haben. Die Dehnkraft ist bei dicken Folien auch sehr hoch, so dass die Benutzung eines solchen Produktes erschwert ist.

In weiterer Ausgestaltung lehrt die Erfindung, dass das elastische Folienlaminat eine weitere dehnbare Folie aufweist, die ebenso wie die erste dehnbare Folie nicht vollflächig, sondern lediglich an in Dehnungsrichtung beabstandeten Verbindungsbereichen mit der elastomeren Trägerfolie verbunden ist und durch eine erstmalige Dehnung des Folienlaminats erzeugte Verformungen aufweist, die zwischen den Verbindungsbereichen kleine Aufwölbungen bilden. Die bleibenden Verformungen der beiden dehnbaren Folien sind unterschiedlich stark ausgeprägt. Infolgedessen beobachtet man bei einer erneuten Dehnung des Folienlaminats zwei sprunghafte Änderungen des Spannungs/Dehnungsverhaltens in einem Spannungs/Dehnungsdiagramm. Vorzugsweise unterscheiden sich die bleibenden Verformungen der beiden dehnbaren Folien um einen Wert, der mindestens 10 % der ursprünglichen Folienlänge entspricht. Die Reißfestigkeiten der dehnbaren Folien sind so eingestellt, dass die diejenige Folie mit der größeren bleibenden Verformung wenigstens noch eine Dehnung von 10 % ihrer Länge über ΔL_{A} hinaus zulässt und dass die andere Folie in Strecklage um mindestens 20 % ihrer Länge gedehnt werden kann, ohne dass die betreffenden Folien reißen.

Die elastomeren Eigenschaften und der sich einstellende Dauerverformungsgrad können durch Polymermischungen aus thermoplastischen Elastomeren und thermoplastischen Kunststoffen eingestellt werden. Ferner sind die Eigenschaften der Folien durch Coextrusion unterschiedlicher Materialien beeinflussbar. Gemäß einer bevorzugten Ausführung der Erfindung bestehen die elastomere Trägerfolie und/oder die dehnbaren Folien jeweils aus mehrschichtigen Coextrusionsfolien.

Die erfindungsgemäße Laminatfolie wird aus einer elastomeren Trägerfolie sowie einer oder mehreren weiteren Folien, die dehnfähig sein müssen und sich hinsichtlich ihrer elastomeren und plastischen Eigenschaften unterscheiden, erzeugt. Der Schichtenverbund ist aus den vorgefertigten Folien auf einfache Weise herstellbar. Die Folien werden so ausgewählt, dass die elastomere Folie mit dem kleinsten Dauerverformungsgrad als elastomere Trägerfolie das elastische Verhalten im ersten Dehnungsbereich bestimmt. Wenn für eine Anwendung ein zweiter elastischer Bereich erstrebenswert ist, wird eine dehnbare Folie mit elastischen Eigenschaften im Laminat eingesetzt, die einen höheren Dauerverformungsgrad als die elastomere Trägerfolie aufweist. Für weitere elastische Bereiche können in der Regel weitere Schichten und Folien eingesetzt werden. Auf diese Weise lassen sich Laminate nach Wunsch zusammenstellen, die in unterschiedlichen Dehnungsbereichen unterschiedliche Dehnungskräfte und Rückstellkräfte aufweisen. Man kann in verschiedenen Bereichen durch Auswahl an sich bekannter Folien das Elastizitätsverhalten nach Bedarf definieren. Auch die für elastische Verschlussbänder bedeutsame Gesamtfestigkeit lässt sich durch den Einsatz einer oder mehrerer dehnfähiger Kunststoffschichten bestimmen. Nach der Verarbeitung zu einem Folienlaminat begrenzt diese Schicht nicht die Elastizität im gewünschten Bereich, sondern bringt eine Fähigkeit des Laminates hinzu. Diese Funktion kann durch eine oder mehrere dehnfähige Lagen erfüllt werden.

Insbesondere sollte die elastomere Trägerfolie bei einer Dehnung um 175 % der Ursprungslänge eine bleibende Verformung von maximal 10 % der Ursprungslänge aufweisen. Die elastomere Trägerfolie besteht vorzugsweise aus einem aus der Gruppe Styrol-Block-Copolymere, Polyurethane, Polyester, Polyether, Polyether-Block-Copolymere ausgewähltem Elastomer. Ferner kann die elastomere Trägerfolie mehrschichtig aus unterschiedlichen Elastomeren aufgebaut sein.

Die dehnbaren Folien bestehen zweckmäßig aus einem Polyolefin oder Mischungen eines Polyolefin und einem thermoplastischem Elastomer. Bevorzugt sind Polyethylen, dessen Copolymere, Polypropylen, dessen Copolymere sowie Mischungen der genannten Polyolefine.

In den Verbindungsbereichen werden die Folien miteinander verschweißt oder verklebt, wobei vorzugsweise elastische Hotmelt-Kleber verwendet werden.

Die Folienschichten können schließlich auf wenigstens einer Seite mit einem Faservliesstoff, einem textilen Gewebe oder Gewirk belegt sein. Im Rahmen der Erfindung liegt es schließlich, das Folienlaminat zusätzlich zu perforieren um die Luftdurchlässigkeit zur verbessern.

Im Folgenden wird die Erfindung anhand von Ausführungsbeispielen erläutert. Es zeigen schematisch:
- Fig. 1a: einen zweischichtigen Folienverbund, aus dem durch Dehnung ein erfindungsgemäßes Folienlaminat herstellbar ist,
- Fig. 1b: den Gegenstand der Fig. 1a in gedehntem Zustand,
- Fig. 1c: ein erfindungsgemäßes Folienlaminat in zweischichtiger Ausführung im Ruhezustand,
- Fig. 2a: ein dreischichtiges Folienlaminat im Ruhezustand,
- Fig. 2b: das in Fig. 2a dargestellte Folienlaminat in der ersten Stufe einer späteren Dehnung,
- Fig. 3: ein Spannungs/Dehnungsdiagramm für das in Fig. 1c dargestellte Folienlaminat,
- Fig. 4: ein Spannungs/Dehnungsdiagramm für das in Fig. 2a dargestellte Folienlaminat,
- Fig. 5: ein Anlageschema zur Herstellung des erfindungsgemäßen Folienlaminates,
- Fig. 6: ein Detail einer Dehnungswalze.

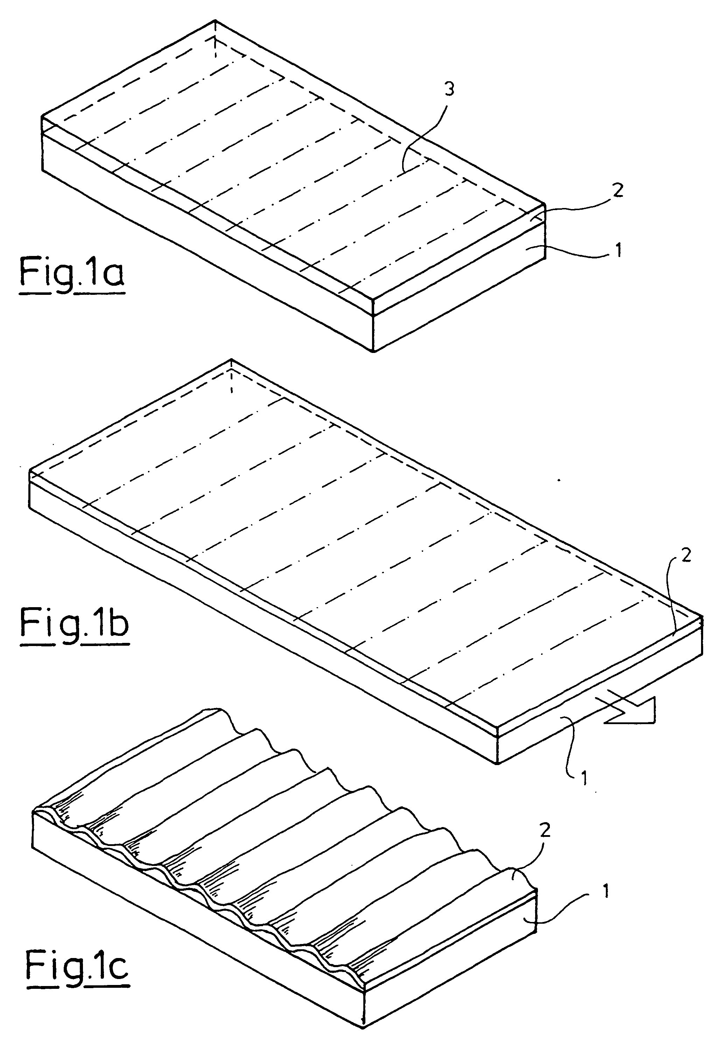

Das in den Fig. 1a bis 1c dargestellte elastische Folienlaminat besteht aus einer elastomeren Trägerfolie 1, die sich bei einer Verformung um eine Länge ΔL_{A} reversibel dehnen lasst, und einer dehnbaren Folie 2 aus einem plastisch verformbaren Kunststoff, die mit der elastomeren Trägerfolie 1 nicht vollflächig, sondern lediglich an in Dehnungsrichtung beabstandeten Verbindungsbereichen 3 verbunden ist. Die elastomere Trägerfolie 1 und die dehnbare Folie 2 sind jeweils mehrschichtig coextrudiert. Der Aufbau der Folie wird im Folgenden anhand eines Ausführungsbeispiels 1 näher erläutert.

### Ausführungsbeispiel 1

Zur Herstellung der elastomeren Trägerfolie 1 wird auf einer Coextrusionsanlage eine dreischichtige Folie extrudiert. Bei der dazu verwendeten, mit drei Extrudern ausgestatteten Anlage ist der mittlere Extruder ein Einschneckenextruder mit einem Schneckendurchmesser von 90 mm (D) und einer Zylinderlänge von 30 D. Die beiden anderen Extruder haben Schnecken mit einem Durchmesser von 50 mm mit einer Zylinderlänge von 30 D. Die Polymerzubereitung für die mittlere Schicht enthält in Gew.-%:
50,5 Gew.-% SBS (Styrol-Butadien-Styrol) mit 30 % Styrol
24,5 Gew.-% paraffinisches Öl
20 Gew.-% Ethylvinylacetat (EVA) mit einem Schmelzindex von 2 g/10 min bei 190°C und 2,16 kg und einem Vinylacetatgehalt von 18 %
4,5 Gew.-% Titandioxid-Batch
0,5 Gew.-% Antioxidanz Irganox 1010, Hersteller Ciba-Geigy.

Für die Außenschichten der elastomeren Trägerfolie wird eine Polyethylenzubereitung mit einem Schmelzindex von 18 g/10 min bei 190°C und 2,16 kg verwendet. Der Polyethylengehalt betrug 75 Gew.-%. Hinzu kommt 15 Gew.-% Talkum und 10 Gew.-% säuremodifiziertes EVA (Bynel CXY 1123). Die Rohstoffzubereitung wird in den Extrudern aufgeschmolzen, homogenisiert und bei eine Massetemperatur von 200 ± 10°C unter einem Druck von 200 ± 50 bar durch Adapter in einen Verteiler der Firma Cloeren und dann in eine T-Düse gepresst. Die Maße dieser Düse waren 0,7 mm Höhe und 165 mm Breite.

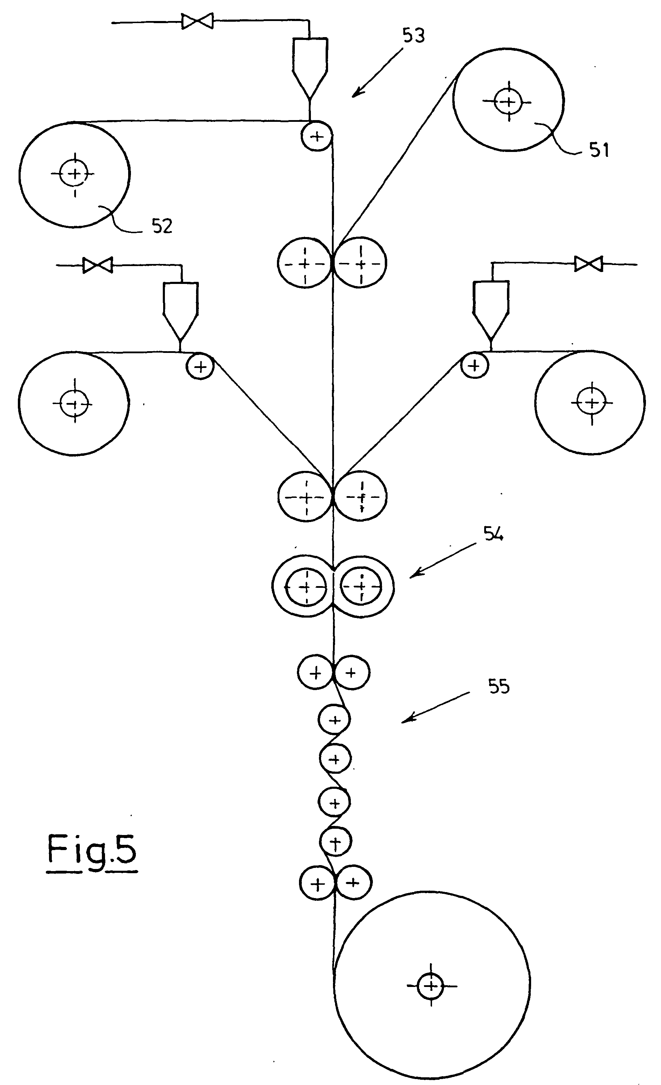

Die geformte Schmelze wird nach dem Austritt aus dem Düsenspalt durch einen Luftrakel auf einer mit Wasser gekühlten Weise fixiert und abgekühlt. Bei einer Abzugsgeschwindigkeit von 40 m/min wird eine 50 µm dicke Folie geformt, bei der die Außenschichten jeweils 5 µm dick und der Kern 40 µm dick sind. Die beschriebene dreischichtige elastomere Trägerfolie wird auf einer Vorratsrolle 51 (vgl. Fig. 5) aufgewickelt.

Für die dehnbare Folie 2 wird auf einer Dreischicht-Blasfolienanlage mit drei Extrudern gearbeitet, die jeweils 60 mm Schneckendurchmesser und 25 D Zylinderlänge haben. Die dehnbare Folie ist 30 µm dick und besitzt einen dreischichtigen Aufbau aus:

| | |
|---|---|
| Erste Schicht | 70 Gew.-% HDPE, Dichte 0,960 g/cm³ |
| | |
| | 30 Gew.-% LLDPE, Dichte 0,922 g/cm³, Schmelzindex 0,9 g/10 min bei 190°C und 2,16 kg |
| | |
| | Schichtstärke 12,5 µm |
| | |
| Zweite Schicht | 65 Gew.-% LLDPE, Dichte 0,935 g/cm³, |
| | |
| | 30 Gew.-% LLDPE, Dichte 0,918 g/cm³, Schmelzindex 0,6 g/10 min, |
| | |
| | 5 Gew.-% Titandioxid-Batch (60 % Titandioxid) |
| | Schichtstärke 12,5 µm |
| | |
| Dritte Schicht | 30 Gew.-% EVA mit 10 % Vinylacetat, Schmelzindex 2 g/10 min |
| | |
| | 70 Gew.-% LDPE, Dichte 0,922 g/cm³, Schmelzindex 7 g/16 min |
| | |
| | Schichtstärke 5 µm |

Die Coextrusion der dehnbaren Folie 2 erfolgt mit Einsatz von Coextrusionswerkzeugen der Firma Windmüller und Hölscher, Lengerich. Mit einer Düse von 400 mm Durchmesser und Spaltbreite vom 2 mm wird die Folie mit einer Leistung von 200 kg/Stunde extrudiert. Diese Folie wird auf einer Vorratsrolle 52 aufgewickelt

Gemäß dem in Fig. 5 beschriebenen Verfahrensschema werden die auf den Vorratsrollen 51 und 52 aufgewickelten Folien 1 und 2 auf einem Laminator 53 verklebt, wobei sich gemäß Fig. 1 Klebstoffstreifen ergeben. Als Klebstoff wird ein handelsüblicher, auf SIS basierender Hotmelt-Kleber eingesetzt. Der Klebstoffauftrag erfolgt streifenförmig mittels einer Düse (0,5 mm Klebstoff + 1,5 mm Unterbrechung). Direkt nach Verlassen des Kaschierwerkzeugs 53 wird der Folienverbund mit einem Werkzeug 54 um 200 % in Querrichtung verdehnt, so dass sich schematisch eine Konfiguration gemäß Fig. 1b ergibt. Nach sofortiger Entspannung resultiert ein Folienlaminat gemäß Fig. 1c. Die dehnbare Folie 2 des Folienlaminats hat damit durch die erste gemeinsame Verformung um eine Länge ΔL_{A} eine bleibende Verformung Δl_{b} erhalten, die wesentlich größer ist als die bleibende (geringe) Verformung Δlₐ der elastomeren Trägerfolie 1. Zwischen den Verbindungsbereichen 3, d.h. Klebstoffstreifen, ist demnach das Material der dehnbaren Folie 2 bleibend verformt, so dass sich beispielsweise kleine Aufwölbungen bzw. Bausche 4 bilden.

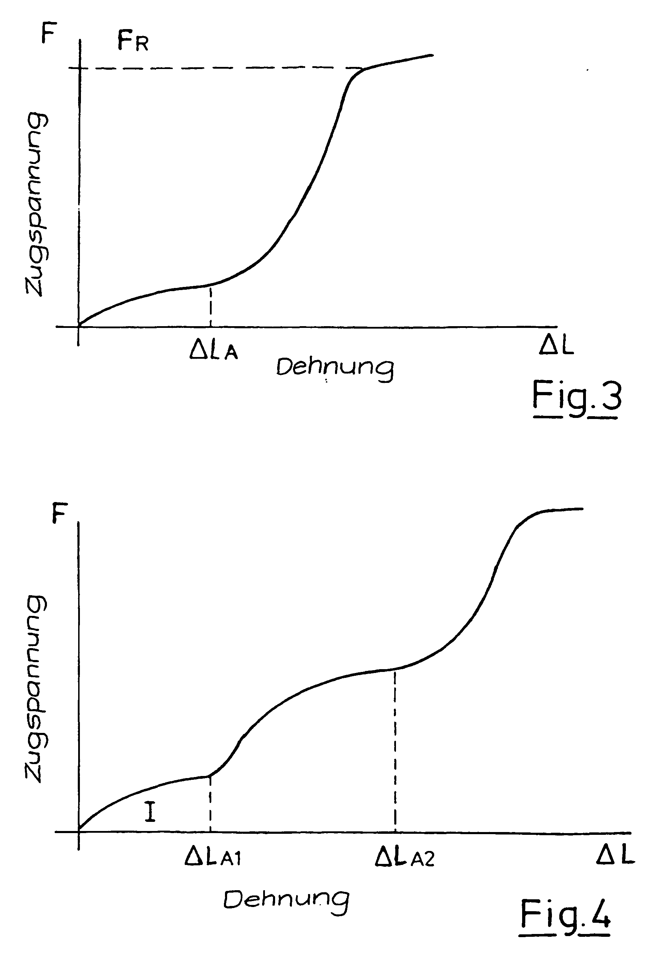

Wesentlich ist, dass bei erneuter Verformung des Folienlaminats gemäß Fig. 1c oberhalb des Grenzbereiches der Verformung, wo ΔL > ΔL_{A} gilt, die für eine weitere Dehnung des Folienlaminats erforderliche Zugkraft aufgrund der bei dieser Dehnung wirksam werdenden Reaktionskraft der dehnbaren Folie 2 sprunghaft ansteigt. Hierzu wird auf das Spannungs/Dehnungsdiagramm gemäß Fig. 3 verwiesen. Während sich zunächst das Folienlaminat gemäß Fig. 1c wie eine übliche Elastomerfolie verhält, steigt die für die weitere Dehnung erforderliche Kraft F steil an, und zwar bis zur Reißgrenze F_{R}, wo die dehnbare Folie 2 zu reißen beginnt. Die Folie ist jedoch so ausgerüstet, dass die Reißgrenze wesentlich höher liegt als die Kraft, die bis zum Erreichen der Dehnung ΔL_{A} erforderlich ist.

### Ausführungsbeispiel 2:

Ein entsprechend dem Ausführungsbeispiel 1 hergestelltes Folienlaminat wird direkt vor der Dehnung mittels eine Rotationsstanze gelocht. Der Durchmesser der runden Löcher beträgt 0,8 mm. Insgesamt 20 % der vorliegenden Flächen wurden ausgestanzt. Damit wird ein elastisches, luftdurchlässiges Laminat hergestellt.

### Ausführungsbeispiel 3:

Ein Folienlaminat, hergestellt wie im Ausführungsbeispiel 1, wird vor dem Verdehnen zusätzlich auf einer Seite mit einem Polypropylen-Faservliesstoff mit einer mittleren Dicke von 50 µm streifenförmig verklebt und dann zu 200 % verdehnt. Damit kann ein elastisches Laminat erzeugt werden, das eine textile Oberfläche besitzt, einen angenehmen flauschigen Touch hat und für Hygieneprodukte verwendet werden kann. Anstelle der Vliesstoffe kann auch ein Gewebe oder ein Gewirke verwendet werden.

### Ausführungsbeispiel 4:

Auf der im Ausführungsbeispiel 1 erläuterten Coextrusionsanlage wird eine weitere dehnbare, etwa 75 µm dicke, dreischichtige Folie 4 extrudiert mit folgendem Schichtenaufbau:

| | |
|---|---|
| Außenschichten | 75 Gew.-% Polypropylen-Blockcopolymer, Dichte 0,905 g/cm³, Schmelzindex 23 g/10 min bei 230°C, 2,16 kg |
| | |
| | 20 Gew.-% SEBS mit einem Styrolgehalt von 26 % |
| | |
| | 5 Gew.-% Polyethylen, Dichte 0,922 g/10 cm³, Schmelzindex 2 g/10 min bei 190°C, 2,16 kg |
| | |
| | Dicke der Außenschichten 16 µm |
| | |
| Kernschicht | 60 Gew.-% SEBS mit einem Styrolgehalt von 26 % |
| | |
| | 35 Gew.-% HDPE, Dichte 0,956 g/cm³, Schmelzindex 4 g/10 min bei 190°C, 2,16 kg |
| | |
| | 4,5 Gew.-% Titandioxid-Batch |
| | |
| | 0,5 Gew.-% Irganox 1010 |

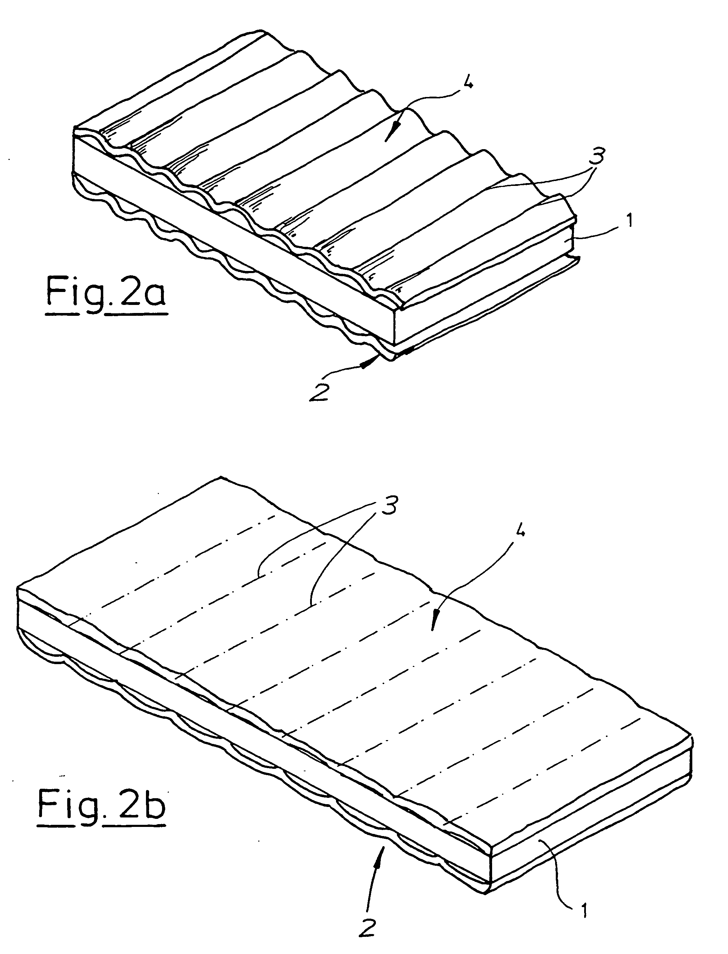

Nach der Extrusion und Abkühlung der dreischichtigen Folie 4 wird diese zusammen mit der elastomeren Trägerfolie 1 und der dehnbaren Folie 2 verklebt und verdehnt. Da die beiden dehnfähigen Folien 2 und 4 ein unterschiedliches Dehnungsverhalten haben, resultiert ein Folienlaminat, dessen Verhalten im Spannungs/Dehnungsdiagramm in Fig. 4 dargestellt ist. Zunächst wird bei einer elastischen Dehnung lediglich die elastomere Trägerfolie 1 beansprucht, bis die Dehnung ΔL_{A1} erreicht ist. Dies ist im Zustand gemäß Fig. 2b zu erkennen. Bei weiterem Dehnen dehnt sich die obere Folie 4 in Strecklage, wobei erhebliche Kräfte zum Dehnungsverhalten beitragen. Wenn die untere Folie 2 dann nicht mehr gebauscht ist, ist der Punkt ΔL_{A2} erreicht. Von diesem Punkt an wird wiederum ein sprunghafter Anstieg der Kraft F beobachtet, bis schließlich die Reißgrenze beider Folien 2, 4 erreicht wird.

Das sprunghafte Verhalten im Spannungs/Dehnungsdiagramm an zwei Grenzbereichen der Dehnung wird insbesondere für Verschlussbändchen von Hygieneartikeln, wie Wegwergwindeln, angestrebt.

Das Herstellungsverfahren der beschriebenen Folienlaminate ist in Fig. 5 dargestellt. Es ist wirtschaftlich und einfach durchführbar. Die aufzuwendenden Materialkosten konnen auf jede Anwendung abgestimmt werden. Das Folienlaminat wird aus den entsprechend ausgewählten Folien zusammengestellt und im unverdehnten Zustand nicht vollflachig, sondern lediglich an in Dehnungsrichtung beabstandeten Verbindungsbereichen verklebt oder verschweißt. Das Muster für die Verklebungs- oder Verbindungstextur wird abhängig von der Anwendung ausgewählt. Soll ein in Querrichtung elastisches Laminat hergestellt werden, ist eine Verbindung in Längsstreifen bevorzugt. Üblicherweise wird mit einem Klebstoff gearbeitet, der streifenförmig durch eine entsprechende Düse oder durch eine strukturierte Auftragswalze auf die Folien aufgetragen wird. Nach der Verklebung wird die Laminatfolie in die gewünschte Richtung verdehnt.

Die anfängliche Dehnung kann in einem Bereich von 50 bis 500 % der Urspruchslänge gewählt werden, abhängig von der Zusammensetzung der Laminatfolien und den gewünschten Eigenschaften. Die Rückstellung erfolgt direkt danach kurz vor dem Aufwickeln bzw. Ablegen der Laminatfolie.

Vor oder nach dem anfänglichen Verdehnen kann die Laminatfolie perforiert werden, beispielsweise gelocht, gestanzt oder geschlitzt werden. Falls eine Textur der Oberfläche gewünscht ist, kann die Laminatfolie auf einer oder auf ihren beiden Außenseiten eine zusätzliche Schicht aus einem Faservliesstoff oder aus einem Gewirk oder Gewebe erhalten. Die Herstellung erfolgt auch hier wie bereits beschrieben.

Zum Verkleben werden bevorzugt elastische Hotmelt-Klebstoffe eingesetzt, die durch ihre elastomere Natur die Elastizität der Laminatfolie nicht negativ beeinflussen.

Auch chemisch haftende Klebstoffe auf der Basis von Polyurethan, die abhängig vom Polymeraufbau ein mehr oder weniger ausgeprägtes elastomeres Verhalten aufweisen können, sind anwendbar. In bestimmten Fällen können auch Klebstoffe auf der Basis von Naturkautschuk und synthetischem Gummi verwendet werden. Klebstoffe, die aus einer Lösung, einer Dispersion oder einer Mischung heraus ausgeschieden werden oder die fotohärtend ausgerüstet sind, ergänzen die vorgenannte Palette, ohne diese zu erschöpfen.

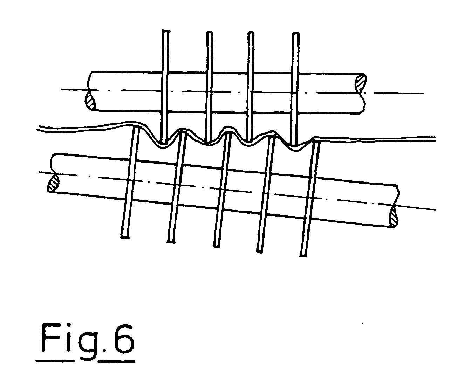

Fig. 5 zeigt die Mannigfaltigkeit der verschiedenen Herstellungsschritte. Es kann ein Querverdehnen erfolgen, und zwar an der Dehnstation 54, wobei hier gemäß Fig. 6 zwei Reckwalze miteinander zusammenwirken, durch die das Laminat hindurchgeführt wird.

Durch mit verschiedenen Geschwindigkeiten angetriebene Dehnwalzen, die in einer Dehnstation 55 zusammengefasst sind, kann auch ein Längsverdehnen des Folienlaminats erfolgen. Das elastische Laminat kann anschließend aufgewickelt werden.

Die Folien werden vorzugsweise durch Folienextrusion erzeugt. Hierbei wird überwiegend mit Breitschlitzdüsenextrusion (Flachfolienextrusion) bzw. mit Blasfolienextrusion gearbeitet. Eine Coextrusion ist dabei einer Monofolienextrusion vorzuziehen. In der Coextrusion können Elastizität und blockfreies Verhalten in sich vereinigt werden. Die Coextrusion erlaubt auch durch eine gezielte Gestaltung der Einzelschichten eine Verbesserung der Beständigkeiten, Modifizierung der Siegeleigenschaften sowie eine gezielte Einstellung der Dauerverformung der Folien, was die Mannigfaltigkeit der Möglichkeiten wesentlich vergrößert. Für die elastomeren Schichten sowie für die dehnfähigen Schichten können auch mit Methalocen-Katalysatoren hergestellte Polymere zum Einsatz kommen. Interessant sind hier die Copolymere des Ethylens mit Octen mit vergleichsweise hohen Octen-Anteilen und sehr niedrigen Dichten (< 0,890 g/cm³).

In Versuchen haben sich auch die Interpolymere aus Ehtylen und Styrol als anwendbar erwiesen, wie sie unter dem Handelsnamen "Index" (Dow Chemicals) bekannt sind. Für die Herstellung der dehnfähigen Schichten der Laminate wird die Blasfolienextrusion bevorzugt, wobei in einigen Fällen auch Flachfolienextrusion möglich ist. Weiterhin haben mehrschichtige coextrudierte Folien den Vorteil, durch einen gezielten Aufbau leichter das gewünschte Verhalten erzeugbar zu machen. So können für die Versiegelung geeignete Siegelschichten mit hochfesten und dehnfähigen Schichten kombiniert werden. Als besonders gut geeignete Kunststoffe haben sich hier Polymere auf der Basis von Ethylen, Popylen oder ihrer Copolymere erwiesen. Für bestimmte andere Fälle sind auch Polyamide verwendbar. Die Anwendungsbreite derartiger Folienlaminate ist nicht nur auf Hygieneprodukte und deren Ausstattung begrenzt, sondern lässt sich auch anwenden auf technische Ummantelungen, Schutzkleidung, Verbindungsstreifen für Spezialklebstoffbänder und dergleichen.

## Patentansprüche

1. Elastisches Folienlaminat, dessen Elastizitätsmodul nach einer Dehnung um eine Länge ΔL_{A} sprunghaft ansteigt mit
einer elastomeren Trägerfolie (1), die sich bei einer Verformung um eine Länge ΔL_{A} reversibel dehnen lässt, und
einer dehnbaren Folie (2) aus einem plastisch verformbaren Kunststoff, die mit der elastomeren Trägerfolie (1) nicht vollflächig sondern lediglich an in Dehnungsrichtung beabstandeten Verbindungsbereichen (3) verbunden ist,
wobei die dehnbare Folie (2) infolge einer erstmaligen Dehnung des Folienlaminats um die Länge ΔL_{A} eine bleibende Verformung Δl_{b} aufweist, die wesentlich größer ist als eine bleibende Verformung Δlₐ der elastomeren Trägerfolie (1) und zwischen den Verbindungsbereichen (3) kleine Aufwölbungen bildet, wobei die dehnbare Folie (2) eine Reißfestigkeit aufweist, die bei zunehmender Zugspannung eine zusätzliche Dehnung, die mindestens 10 % der ursprünglichen Folienlänge beträgt, über den Dehnungswert ΔL_{A} hinaus ohne Reißen zulässt.

2. Elastisches Folienlaminat nach Anspruch 1 mit einer weiteren dehnbaren Folie (4), die ebenso wie die erste dehnbare Folie nicht vollflächig, sondern lediglich an in Dehnungsrichtung beabstandeten Verbindungsbereichen (3) mit der elastomeren Trägerfolie (1) verbunden ist und durch eine erstmalige Dehnung des Folienlaminats erzeugte Verformungen aufweist, die zwischen den Verbindungsbereichen (3) kleine Aufwölbungen bilden, wobei die bleibenden Verformungen der beiden dehnbaren Folien (2, 4) unterschiedlich stark ausgeprägt sind und infolgedessen bei erneuter Dehnung des Folienlaminats zwei sprunghafte Änderungen des Spannungs/Dehnungsverhaltens in einem Spannungs/Dehnungs-Diagramm zu beobachten sind.

3. Elastische Folienlaminat nach Anspruch 2, wobei die bleibenden Verformungen der beiden dehnbaren Folien sich um einen Wert unterscheiden, der mindestens 10 % der ursprünglichen Folienlänge entspricht.

4. Elastisches Folienlaminat nach einem der Ansprüche 1 bis 3, wobei die elastomere Trägerfolie (1) und die dehnbaren Folien (2, 4) jeweils aus mehrschichtigen Coextrusionsfolien bestehen.

5. Elastisches Folienlaminat nach einem der Ansprüche 1 bis 4, wobei die elastomere Trägerfolie (1) bei einer Dehnung um 175 % der Ursprungslänge eine bleibende Verformung von maximal 10 % der Ursprungslänge aufweist.

6. Elastisches Folienlaminat nach einem der Ansprüche 1 bis 5, wobei die elastomere Trägerfolie (1) aus einem aus der Gruppe Styrol-Block-Copolymere, Polyurethane, Polyether, Polyether-Block-Copolymere ausgewähltem Elastomer besteht.

7. Elastisches Folienlaminat nach einem der Ansprüche 1 bis 6, wobei die dehnbaren Folien (2, 4) aus einem Polyolefin oder aus Mischungen aus einem Polyolefin und einem thermoplastischem Elastomer bestehen.

8. Elastisches Folienlaminat nach einem der Ansprüche 1 bis 7, wobei die Folien (1, 2, 4) in den Verbindungsbereichen (3) miteinander verschweißt oder mittels eines vorzugsweise elastischen Klebers verklebt sind.

9. Elastisches Folienlaminat nach einem der Ansprüche 1 bis 8, wobei die Folienschichten (2, 4) auf wenigstens einer Seite mit einem Faservliesstoff oder einem textilen Gewirk oder Gewebe gelegt sind.

10. Elastisches Folienlaminat nach einem der Ansprüche 1 bis 9, wobei der Schichtenverbund perforiert ist.

## Claims

1. An elastic film laminate, the modulus of elasticity of which exhibits a sudden increase after extension by a length ΔL_{A}, comprising
an elastomeric backing film (1) which can be reversibly extended by a length ΔL_{A} on deformation, and
an extensible film (2) made of a plastically deformable plastics material which is joined to the elastomeric backing film (1) not over its complete surface but merely at joining regions (3) which are spaced apart in the direction of extension,
wherein as a result of the film laminate being extended for the first time by a length ΔL_{A} the extensible film (2) exhibits a permanent deformation ΔL_{b} which is significantly greater than any permanent deformation ΔL_{A} of the elastomeric backing film (1), and which forms small undulations between the joining regions (3), wherein the extensible film (2) has an ultimate tensile strength which when the tensile stress is increased permits an additional extension, which is at least 10 % of the original film length, beyond the extension value ΔL_{A}, without tearing.

2. An elastic film laminate according to claim 1, comprising a further extensible film (4) which, like the first extensible film, is joined to the elastomeric backing film (1) not over its complete surface but merely at joining regions (3) which are spaced apart in the direction of extension, and which comprises deformations which are produced due to the film laminate being extended for the first time, and which forms small undulations between the joining regions (3), wherein the permanent deformations of the two extensible films (2, 4) are of different magnitudes and as a consequence of this two sudden changes are observed in the stress/extension behaviour on a stress/extension graph when renewed extension of the film laminate is effected.

3. An elastic film laminate according to claim 2, wherein the permanent deformations of the two extensible films differ by a value which corresponds to at least 10 % of the original film length.

4. An elastic film laminate according to any one of claims 1 to 3, wherein the elastomeric backing film (1) and the extensible films (2, 4) each consist of multi-layer coextruded films.

5. An elastic film laminate according to any one of claims 1 to 4, wherein the elastomeric backing film (1) has a maximum permanent deformation of 10 % of its original length when extended by 175 % of its original length.

6. An elastic film laminate according to any one of claims 1 to 5, wherein the elastomeric backing film (1) consists of an elastomer selected from the group comprising styrene block copolymers, polyurethanes, polyethers and polyether block copolymers.

7. An elastic film laminate according to any one of claims 1 to 6, wherein the extensible films (2, 4) consist of a polyolefin or of mixtures of a polyolefin and a thermoplastic elastomer.

8. An elastic film according to any one of claims 1 to 7, wherein in the joining regions (3) the films (1, 2, 4) are welded to each other or are adhesively bonded by means of what is preferably an elastic adhesive.

9. An elastic film according to any one of claims 1 to 8, wherein the film layers (2, 4) are laid with a non-woven fibrous fabric or with a knitted or woven textile fabric on at least one side.

10. An elastic film according to any one of claims I to 9, wherein the layer composite is perforated.

## Revendications

1. Stratifié de feuilles élastique dont le module d'élasticité après un étirage augmente brusquement d'une longueur ΔL_{A} avec
une feuille de support (1) élastomère qui, en cas de déformation, peut s'allonger de manière réversible d'une longueur ΔL_{A}, et
une feuille (2) extensible en une matière synthétique plastiquement déformable qui est assemblée à la feuille de support (1) élastomère non pas sur toute la surface mais uniquement dans des zones de liaison (3) espacées dans la direction de l'étirage,
la feuille extensible (2) présentant, à la suite d'un premier allongement du stratifié de feuilles de la longueur ΔL_{A}, une déformation permanente Δl_{b} qui est sensiblement supérieure à une déformation permanente Δlₐ de la feuille de support (1) élastomère, et forme de petits bombements entre les zones de liaison (3), la feuille extensible (2) présentant une résistance à la déchirure qui, lorsque la contrainte de traction augmente, autorise un allongement supplémentaire qui est au moins égal à 10% de la longueur initiale de la feuille au-delà de la valeur d'allongement ΔL_{A}, sans déchirure.

2. Stratifié de feuilles élastique selon la revendication 1 avec une autre feuille extensible (4) qui, comme la première feuille extensible, n'est pas reliée sur toute sa surface, mais uniquement dans des zones de liaison (3) espacées dans la direction de l'étirage, à la feuille de support (1) élastomère, et présente des déformations produites par un premier allongement du stratifié en feuilles, lesquelles forment de petits bombements entre les zones de liaison (3), les déformations permanentes des deux feuilles extensibles (2, 4) étant marquées fortement différemment et, en conséquence, en cas de nouvel allongement du lamifié à feuilles, on observe deux variations brusques du comportement contrainte/allongement dans un diagramme contrainte/allongement.

3. Stratifié de feuilles élastique selon la revendication 2, dans lequel les déformations permanentes des deux feuilles extensibles diffèrent d'une valeur qui correspond au moins à 10% de la longueur initiale des feuilles.

4. Stratifié de feuilles élastique selon l'une des revendications 1 à 3, dans lequel la feuille de support (1) élastomère et les feuilles extensibles (2, 4) sont constituées chacune de feuilles co-extrudées à plusieurs couches.

5. Stratifié de feuilles élastique selon l'une des revendications 1 à 4, dans lequel la feuille de support (1) élastomère présente, dans le cas d'un allongement de 175% de la longueur initiale, une déformation permanente de 10% au maximum de la longueur initiale.

6. Stratifié de feuilles élastique selon l'une des revendications 1 à 5, dans lequel la feuille de support (1) élastomère est constituée d'un élastomère choisi dans le groupe copolymères en masse de styrène, polyuréthanes, poly-éthers, copolymères en masse de polyester.

7. Stratifié de feuilles élastique selon l'une des revendications 1 à 6, dans lequel les feuilles extensibles (2, 4) sont constituées d'une polyoléfine ou de mélanges d'une polyoléfine et d'un élastomère thermoplastique.

8. Stratifié de feuilles élastique selon l'une des revendications 1 à 7, dans lequel les feuilles (1, 2, 4) sont soudées entre elles dans les zones de liaison (3) ou sont collées au moyen d'une colle de préférence élastique.

9. Stratifié de feuilles élastique selon l'une des revendications 1 à 8, dans lequel les couches de feuilles (2, 4) sont placées sur au moins une face avec un non-tissé ou un tricot ou tissu textile.

10. Stratifié de feuilles élastique selon l'une des revendications 1 à 9, dans lequel l'assemblage des couches est perforé.
